# EUROPEAN PATENT APPLICATION

(11) **EP 0 744 571 A1**
(43) Date of publication of application: **27.11.1996**
(21) Application number: 96104274.4
(22) Date of filing: 18.03.1996
(51) Int. Cl.: F16L 5/00, F24F 1/00, F24H 9/12

(54) **Joint for connecting a fan coil to the water and electricity mains**

(30) Priority: 26.05.1995 IT MI950365 U
(71) Applicant: DE' LONGHI S.P.A., I-31100 Treviso (IT)
(72) Inventor: De' Longhi, Giuseppe, 31100 Treviso (IT)
(74) Representative: Rapisardi, Mariacristina

(57) **Abstract**

A joint for connecting a fan coil to the electricity and water mains, includes a plate member (2) having means (3) for association to a wall (4) and means (5) for a preset positioning of the water (6) and electricity (7) mains connections, in the wall.

## Description

The present invention relates to a joint for connecting a fan coil to the water and electricity mains.

A fan coil is usually composed of a protective casing accommodating an electric motor, which operates a tangential fan, a heat exchanger, adapted to operate with either hot water or cold water, an air filter, a condensate discharge vent, and two connections for the inlet and the outlet of water.

The connection of the fan coil to the electricity and water mains of the buildings is relatively complicated also because it is often necessary to break the walls for connecting the delivery and discharge pipes of the water mains and for connecting the electric cables of the electricity mains to the fan coil connectors.

Therefore, at present, the fan coils are installed in the rooms of a building before the rooms are completed, for practical reasons. In this manner, the rooms may be walled, plastered and finished after the fan coils have been installed.

On the contrary, should the fan coil be installed after the completion of the room, more work on the walls would be required.

This solution is undoubtedly advantageous, considering the great number of fan coils to be installed in a building.

However, as easily understood, installing one or more fan coils in a room or building before the completion causes several inconveniences.

The fan coil may in fact be hit and is apt to be soiled by paint and similar, degrading the apparatus even before using it.

The aim of the present invention is to eliminate the above described shortcomings of the prior art.

Within this aim, an important object of the invention is to provide a joint for connecting a fan coil to the electricity and water mains of a building, when the building and/or the room is completed and ready to be occupied, without the execution of further masonry or paint jobs.
A further object of the invention is to provide a joint for connecting a fan coil to the electricity and water mains in a simple an rapid way, since all the connections are already predisposed.

Not least object of the invention is to provide a joint, for connecting a fan coil to the electricity and water mains, having an extremely reduced cost which has no effect on the overall cost of the fan coil still offering undisputed advantages.

The above aim and objects are achieved by a joint for connecting a fan coil to the electricity and water mains, characterized in that it comprises a plate member having means for association to a wall and means for a preset positioning, in said wall, of the water and electricity mains connections.

Further characteristics and advantages of the invention will be more apparent by the description of a preferred but not exclusive embodiment of a joint for connecting a fan coil to the electricity and water mains, illustrated, by way of indicative but not exclusive example in the enclosed drawings wherein:
FIG. 1 is a perspective view of the application of the joint for connecting a fan coil to the electricity and water mains, according to the invention;
FIG. 2 is a perspective view of how the joint is associated to the wall of the room or building wherein the space conditioner has to be installed;
FIG. 3 is a perspective view of how the space conditioner is associated to the already predisposed joint for connecting it to the electricity and water mains;
FIG. 4 is a top plan view of the joint for connecting a fan coil to the electricity and water mains, according to the invention;
FIG. 5 is a section view according to line V-V of FIG. 4, according to the invention;
FIG. 6 is a section view according to line VI-VI of FIG. 4, according to the invention; and
FIG. 7 shows how the fan coil is disposed with respect to the joint for connecting it to the electricity and water mains

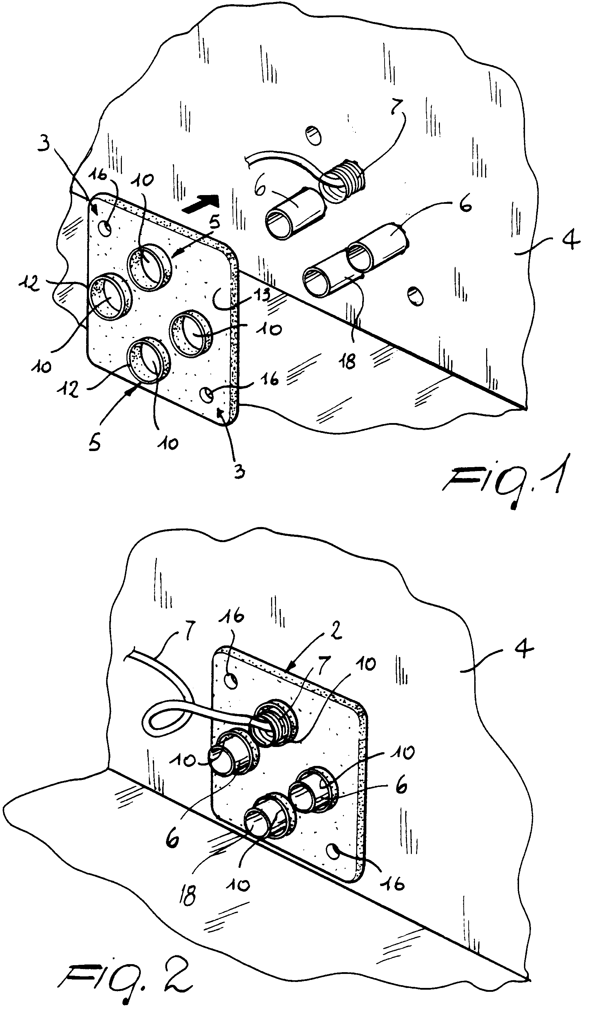

With reference to the above figures, the joint for connecting a fan coil to the electricity and water mains, according to the invention, generally designated by the reference numeral 1, comprises a plate member 2 having means 3 for association to a wall 4 and means 5 for a preset positioning, in said wall 4, of the mains water connections 6 and electricity connections 7.

The positioning means 5 comprises a plurality of apertures, each indicated by 10, arranged on the plate member 2 along a theoretical circumference having its center on the plate member 2.

Apertures 10 are equally spaced apart and have a collar 12 extending from a first face 13 of plate member 2.

Plate member 2 has a rim 15 on its second face 14, opposite to the first face. Rim 15 defines the support portion of the plate member 2 on the wall and, at the same time, a stiffening member of the plate member.

More particularly, the plate member has a quadrangular shape and is made of self-estinguishing plastics (ABS).

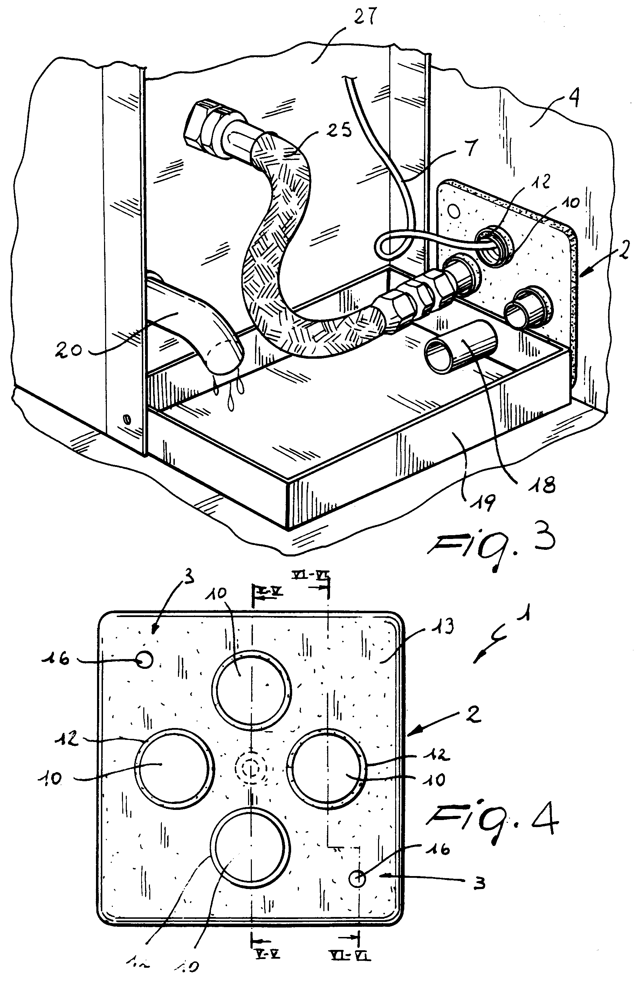

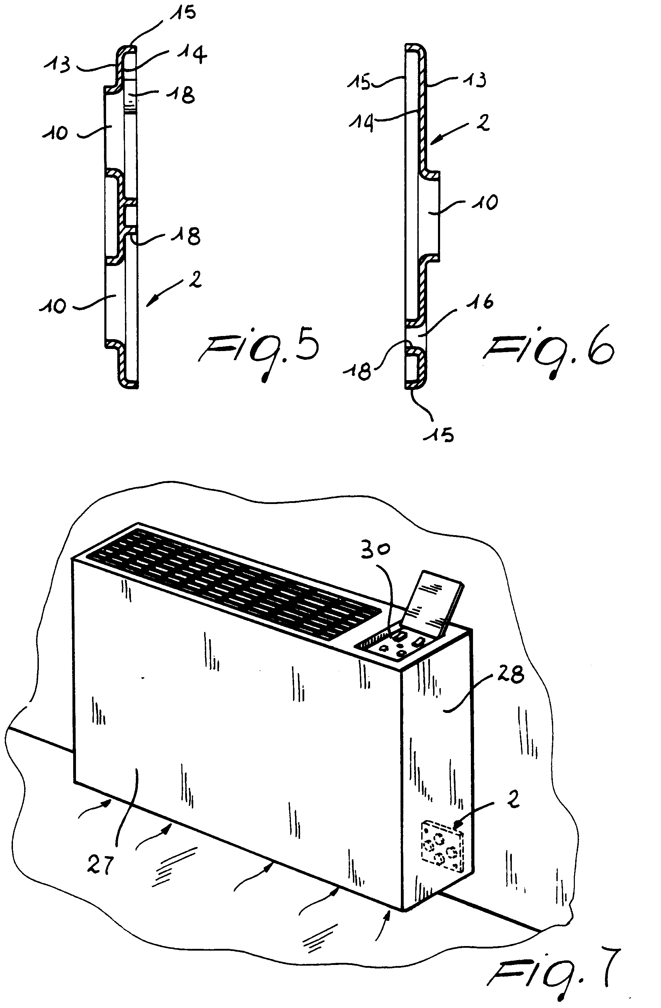

Apertures 10, as clearly visible in FIG. 4, are arranged in a central zone proximate to the sides of the plate member in order to define wide zones at the angles and at the center of the plate member. Associating means 3 are arranged at the wide zones and are defined by holes 16 which are on a diagonal of the plate member.

Each hole 16 has a collar 18 on the side of the second face 14 and the collar 18 has the same heigh of the rim 15.

In this manner, despite being made of plastics, plate member 2 has a considerable resistance to flexion and traction because the several apertures 10 and holes 16 are arranged mutually spaced apart in order to avoid weak zones.

Advantageously, all the apertures 10 have the same diameter and are suited for the passage of the electric feed, for the connection of the water delivery from the fan coil to the mains, for the connections of the return water mains to the fan coil, and for receiving a pipe 18 communicating with a tank 19 adapted to collect the condensate which is produced by the fan coil during its operation and discharged through a pipe 20.

The delivery and return water apertures of plate member 2 are connected to the connections of the fan coil, for example by means of two external coil flexible hoses 25 having a double cone and ogive joint for connection to the ends of pipes 6 protruding from the mains.

The operation of the joint for connecting a fan coil to the electricity and water mains, according to the invention, is apparent from what has been described and illustrated above.

In particular, with reference to the figures, it is evident that while building the room it is possible to dispose the water pipes and the electric cables of the mains in a selected zone so that they coincide with the apertures 10 of the plate member, which is applied to the wall 4 with screws or similar.

In this manner, once the room and/or building is finished and ready to be occupied, the fan coil will be connected to the mains without the need of any further work on the walls.

In particular, the fan coil has a main body 27 accommodating a fan, the heat exchanger, the electric motor operating the fan, the filter, and an adjacent secondary body 28 containing the flexible hoses and the various elements for connection of the main body to the mains.

A control panel 30 for operating the fan coil may be arranged above the secondary body, as for example shown in FIG. 7.

It has been seen in practice that the joint for connecting a fan coil to the electricity and water mains, according to the invention, is particularly advantageous to allow such operation after the completion of the rooms and/or building where the fan coil will be disposed, without performing any further masonry or paint job on the walls, and at the same time saving the apparatus from accidental impacts, tampering and damages.
The materials employed, as well as the dimensions, may be any according to the specific needs and the state of the art.
Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Joint for connecting a fan coil to the electricity and water mains, characterized in that it comprises a plate member (2) having means (3) for association to a wall (4) and means (5) for a preset positioning, in said wall, of the water (6) and electricity (7) mains connections.

2. Joint, according to claim 1, characterized in that said positioning means (5) comprises a plurality of apertures (10) arranged on said plate member along a circumference having its center in the center of said plate member.

3. Joint, according to one or more of the preceding claims, characterized in that said apertures (10) are equally spaced apart.

4. Joint, according to one or more of the preceding claims, characterized in that said apertures have a collar (12) extending from a first face (13) of said plate member.

5. Joint, according to one or more of the preceding claims, characterized in that it comprises a rim (15) extending from a second face (14) of said plate member.

6. Joint, according to one or more of the preceding claims, characterized in that said associating means comprises holes (16) each having a collar (18) on the side of said second face, said collar having the same height of said rim (15).

7. Joint, according to one or more of the preceding claims, characterized in that said plate has a quadrangular shape and said apertures (10) are arranged in a central zone proximate to the sides of said plate member in order to define wide zones at the angles and at the center of said plate member, said zones having said holes.

8. Joint, according to one or more of the preceding claims, characterized in that all said apertures have the same diameter.

9. Joint, according to one or more of the preceding claims, characterized in that it comprises a pipe (18) associated with one of said apertures and communicating with a condensate collecting tank.
